(19) Europäisches Patentamt
European Patent Office
Office européen des brevets

(11) **EP 2 876 713 A1**

(12) **EUROPEAN PATENT APPLICATION**
published in accordance with Art. 153(4) EPC

(43) Date of publication:
**27.05.2015 Bulletin 2015/22**

(51) Int Cl.:
*H01M 4/86* [(2006.01)]   *H01B 1/06* [(2006.01)]
*H01M 8/10* [(2006.01)]

(21) Application number: **13820375.7**

(22) Date of filing: **03.07.2013**

(86) International application number:
**PCT/JP2013/068300**

(87) International publication number:
**WO 2014/013879 (23.01.2014 Gazette 2014/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.07.2012   JP 2012161240**

(71) Applicant: **Tokuyama Corporation**
**Shunan-shi, Yamaguchi-ken 745-8648 (JP)**

(72) Inventors:
• **CHIKASHIGE Youhei**
**Shunan-shi**
**Yamaguchi 745-8648 (JP)**

• **FUKUTA Kenji**
**Shunan-shi**
**Yamaguchi 745-8648 (JP)**
• **YAMAGUCHI Masao**
**Shunan-shi**
**Yamaguchi 745-8648 (JP)**
• **KIKKAWA Yuki**
**Shunan-shi**
**Yamaguchi 745-8648 (JP)**

(74) Representative: **Gulde & Partner**
**Patent- und Rechtsanwaltskanzlei mbB**
**Wallstraße 58/59**
**10179 Berlin (DE)**

(54) **CATALYST LAYER FOR ANION-EXCHANGE MEMBRANE FUEL CELLS, MEMBRANE-ELECTRODE ASSEMBLY, ANION-EXCHANGE MEMBRANE FUEL CELL USING MEMBRANE-ELECTRODE ASSEMBLY, AND METHOD FOR OPERATING ANION-EXCHANGE MEMBRANE FUEL CELL**

(57)    The present invention provides: (1) a catalyst layer for anion-exchange membrane fuel cells, which comprises a catalyst and a non-crosslinked hydrocarbon anion-exchange resin that has an anion exchange capacity of 1.8-3.5 mmol/g; (2) a membrane-electrode assembly for anion-exchange membrane fuel cells, which comprises a hydrocarbon anion-exchange membrane and the catalyst layer; and (3) an anion-exchange membrane fuel cell which is provided with the membrane-electrode assembly.

[Fig.1]

EP 2 876 713 A1

## Description

## Technical Field

The present invention relates to a catalyst layer for use in a solid polymer fuel cell, in particular in an anion-exchange membrane fuel cell, a membrane-electrode assembly (hereinafter, the membrane-electrode assembly is referred to as "MEA") formed with the use of the catalyst layer, an anion-exchange membrane fuel cell including the MEA, and a method for operating the same.

## Background Art

A solid polymer fuel cell is a fuel cell using a solid polymer such as an ion-exchange resin as an electrolyte, and includes a characteristic that the operating temperature is relatively low. For the electrolyte of the solid polymer fuel cell, a cation-exchange membrane or an anion-exchange membrane may be used. Even when any one of such electrolytes is used, the solid polymer fuel cell has the following basic structure.

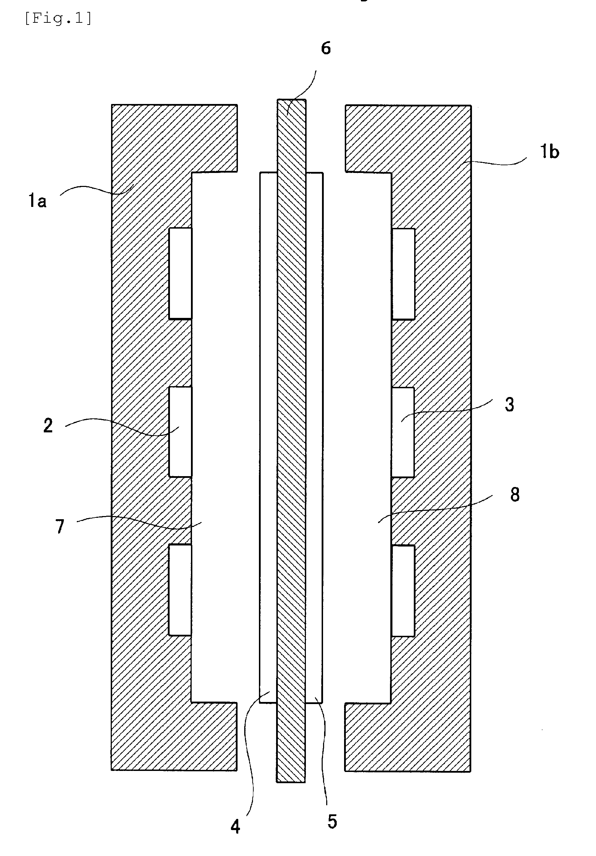

Fig. 1 is a schematic diagram showing a basic structure of the solid polymer fuel cell. In Fig. 1, each of reference signs 1a and 1b represents a cell partition wall. The cell partition wall 1a has a fuel flow hole 2 communicated with the outside, and the cell partition wall 1b has an oxidant gas flow hole 3 communicated with the outside. A space surrounded by cell partition walls 1a and 1b is divided into two by a solid polymer electrolyte membrane 6. To one surface of the solid polymer electrolyte membrane 6 is joined a fuel gas chamber side-gas diffusion electrode (an anode) 4, and to another surface (the back surface) thereof is joined an oxidant chamber side-gas diffusion electrode (a cathode) 5. A fuel gas chamber (an anode chamber) 7 surrounded by the cell partition wall 1a and the solid polymer electrolyte membrane 6 is communicated with the outside through the fuel flow hole 2, and an oxidant chamber (a cathode chamber) 8 surrounded by the cell partition wall 1b and the solid polymer electrolyte membrane 6 is communicated with the outside through the oxidant gas flow hole 3.

The solid polymer fuel cell that has such a basic structure is supplied with a fuel composed of a hydrogen gas, methanol or the like through the fuel flow hole 2 to the fuel gas chamber 7, along with supplied with an oxidant gas composed of oxygen or an oxygen containing gas such as air through the oxidant gas flow hole 3 to the oxidant chamber 8, and further has an external load circuit connected between both of the gas diffusion electrodes, thereby generating an electrical energy, in accordance with the following mechanism. That is, when the cation-exchange membrane is used as the solid polymer electrolyte membrane, at the anode 4, a catalyst included in this electrode comes into contact with the fuel, so that protons (hydrogen ions) are generated. The protons conduct in the solid polymer electrolyte membrane 6 and move to the oxidant chamber 8, thereby reacting with the oxygen in the oxidant gas at the cathode 5 so as to generate water. In addition, electrons generated at the anode 4 in concurrence with the proton move through the external load circuit to the cathode 5, so that energy from the above described reaction may be used as the electrical energy.

In the solid polymer fuel cell that has such an above described structure, as the solid polymer electrolyte membrane, a perfluorocarbon sulfonic acid resin membrane is most commonly used. In addition, as the gas diffusion electrode using such a perfluorocarbon sulfonic acid resin membrane, a gas diffusion electrode that has a catalyst, which is composed of metal particles such as platinum supported on a conductive agent such as carbon black, supported by an electrode substrate made of a porous material, or a gas diffusion electrode that has such a catalyst formed in a layered state on the perfluorocarbon sulfonic acid resin membrane is commonly used. In general, the gas diffusion electrode is thermocompression bonded to the perfluorocarbon sulfonic acid resin membrane, thereby being joined to the perfluorocarbon sulfonic acid resin membrane. In addition, when the joining is performed in such a manner, for the purpose of enhancing the availability of the protons generated on the catalyst within the gas diffusion electrode (in other words, for the purpose of efficiently moving the protons to the electrode), a solution of a perfluorocarbon sulfonic acid resin is applied to a joining surface of the gas diffusion electrode as an ion conductivity imparting agent, or a perfluorocarbon sulfonic acid resin is incorporated into the gas diffusion electrode (Patent Literatures 1 and 2). In addition, the above described perfluorocarbon sulfonic acid resin has also a function to improve the joining performance with respect to the solid polymer electrolyte membrane and the gas diffusion electrode.

However, in the solid polymer fuel cell using such a perfluorocarbon sulfonic acid resin membrane, there arise the following problems mainly due to the perfluorocarbon sulfonic acid resin membrane.

(i) Because the reaction field is an acid atmosphere, it is necessary to use an expensive noble metal catalyst such as platinum.
(ii) Because fluorinated acid is produced through a thermal disposal, the environmental suitability is poor.
(iii) Because the permeability of the fuel gas or the oxidant gas is relatively high, the voltage loss arises.
(iv) Because the raw material is expensive, it is hard to cost-cut.

In order to solve these problems, in particular the above described problem (i), some solid polymer fuel cells using a hydrocarbon anion-exchange membrane instead of the perfluorocarbon sulfonic acid resin membrane have been suggested (Patent Literatures 3 to 5).

These solid polymer fuel cells using a hydrocarbon anion-exchange membrane may generate electricity with the use of a fuel gas such as hydrogen and an oxidant gas such as oxygen, in the same way as in the case of using the perfluorocarbon sulfonic acid resin membrane, however, the reaction mechanism at the electrode and ion species conducting in the solid polymer electrolyte 6 are different from those in the respective electrodes thereof.

For example, when the fuel including hydrogen is supplied through the fuel flow hole 2 to the anode chamber 7, and the oxygen containing oxidant gas such as oxygen or air is supplied through the oxidant gas flow hole 3 to the cathode chamber 8, and further the external load circuit is connected between the anode 4 and the cathode 5, at the cathode 5, the catalyst included in this electrode comes into contact with the oxygen in the oxidant gas and water, so that hydroxide ions are generated. In other words, water is indispensable for the electrode reaction at the cathode. Next, the hydroxide ions generated here conduct in the solid polymer electrolyte membrane 6 and move to the side of the anode, thereby reacting with the fuel at the anode 4 so as to generate water. Electrons generated at the anode 4 in concurrence with the water move through the external load circuit to the cathode 5, so that energy from the above described reaction may be used as the electrical energy.

Because the solid polymer fuel cell using the hydrocarbon anion-exchange membrane has a reaction field becoming a basic atmosphere, there are advantages as follows, in comparison with the solid polymer fuel cell using a cation-exchange membrane such as a perfluorocarbon sulfonic acid resin membrane.

(i) Because it is possible to use a catalyst composed of an inexpensive and abundantly reserved transition metal, the range of choices of the catalyst is extended.

(ii) Various kind of fuels including basic compounds can be used.

(iii) It is possible to use a cell partition wall made of metal that has an excellent processability and mass productivity, without performing an acid-proofing treatment.

(iv) There is an advantage in an oxygen reduction reaction.

In the gas diffusion electrode of a solid polymer fuel cell disclosed in each of the above described publications, because of the same reason why, when the perfluorocarbon sulfonic acid resin membrane is used, the ion conductivity imparting agent composed of the perfluorocarbon sulfonic acid resin is added to the gas diffusion electrode, various kinds of anion-exchange resins are added as the ion conductivity imparting agent. As such an anion-exchange resin, for example, the fluororesin-based one such as a quaternized polymer produced by treating the end of a perfluorocarbon polymer that has a sulfonate group with diamine is also known (e.g., Patent Literature 5). Using this causes a problem in that when the solid polymer electrolyte membrane is the above described hydrocarbon anion-exchange membrane, the affinity at the joining interface between the above described hydrocarbon ion-exchange membrane and the gas diffusion electrode is so poor that the joining strength decreases.

Accordingly, it is said that when the hydrocarbon anion-exchange membrane is used, the anion-exchange resin as the ion conductivity imparting agent is preferably the hydrocarbon one, and thus an anion-exchange resin in which an anion-exchange group is introduced into a thermoplastic elastomer, such as a block copolymer of an aromatic vinyl compound with a conjugated diene, has been suggested (Patent Literature 6). In Patent Literature 6, it is disclosed that when the hydrocarbon anion-exchange resin is a flexible and non-crosslinked hydrocarbon anion-exchange resin that has an excellent joining performance with respect to the above described hydrocarbon anion-exchange membrane, the one that has an ion exchange capacity of from 0.5 to 1.5 mmol/g is good. This is because a hydrocarbon anion-exchange resin that has a high ion exchange capacity is soluble in water. In addition, as to the hydrocarbon anion-exchange resins disclosed in Examples of Patent Literature 6, all of those used to be added to a cathode catalyst layer and an anode catalyst layer are non-crosslinked types, have an anion exchange capacity of from 0.8 to 1.3 mmol/g, and have a solubility in water (20°C) of from 0.02 to 0.04% by mass.

In the solid polymer fuel cell using such a hydrocarbon anion-exchange membrane and an ion conductivity imparting agent, the ion conductivity of the hydrocarbon anion-exchange membrane and the ion conductivity imparting agent is exhibited when they are in a humid condition. Therefore, in order to maintain the ion conductivity of the hydrocarbon anion-exchange membrane and the ion conductivity imparting agent, moisture is necessary. In addition, as described above, at the side of the cathode, water is consumed in the electrode reaction. Therefore, in the fuel cell, it is necessary to continuously supply moisture. In order to supply moisture in the fuel cell, in general, a moisture supplier such as a humidifier is externally installed. However, installing the moisture supplier causes an adverse effect involving an enlargement of the system, a cost increase, a necessity of precise management for the amount of moisture supplied from the moisture supplier, or the like. Therefore, there is a need for a technique to provide a fuel cell operable in a low moistened condition as possible, ideally a fuel cell operable with the use of moisture only included in air without installing the moisture supplier.

**Citation List**

**Patent Literature**

Patent Literature 1: JP 1991-208260 A
Patent Literature 2: JP 1992-329264 A
Patent Literature 3: JP 1999-273695 A
Patent Literature 4: JP 1999-135137 A
Patent Literature 5: JP 2000-331693 A
Patent Literature 6: JP 2002-367626 A

**Summary of Invention**

**Technical Problem**

The inventors have examined a solid polymer fuel cell using a hydrocarbon anion-exchange membrane as a solid polymer electrolyte membrane (hereinafter, also referred to as "anion-exchange membrane fuel cell"). As a result, it has been found that when a moisture supplier is not installed, in particular when the humidity in an oxidant gas supplied to the side of a cathode is low, the performance of the anion-exchange membrane fuel cell significantly depends on the property of an ion conductivity imparting agent included in an MEA, in particular of an ion conductivity imparting agent included at the side of the cathode, and thus depending on the property, an anion-exchange membrane fuel cell that has a sufficient performance is not obtained. In other words, as described above, in a conventional solid polymer fuel cell using a hydrocarbon anion-exchange membrane, only a specific hydrocarbon anion-exchange resin that has a small value of the anion exchange capacity of from 0.5 to 1.5 mmol/g is known as the ion conductivity imparting agent incorporated into a cathode catalyst layer. Because the side of the cathode of the solid polymer fuel cell using the hydrocarbon anion-exchange membrane is a side at which water is consumed in the electrode reaction, the catalyst layer at the side of the cathode (hereinafter, also referred to as "cathode catalyst layer") is easy to dry locally. When the anion exchange capacity of the hydrocarbon anion-exchange resin incorporated into the cathode catalyst layer as the ion conductivity imparting agent is small, the moisture content of the hydrocarbon anion-exchange resin lowers. Accordingly, when the humidity in an oxidant gas supplied to the side of the cathode is low, a spot arises at which a good ion conductivity may not be given to the cathode catalyst layer, so that a sufficient cell output may not be obtained. Furthermore, when operation is continued with the use of the oxidant gas under a low humidity for a long time, water as a reactant is short and the stability of the cell output decreases.

An object, therefore, of the present invention is to provide a catalyst layer for the anion-exchange membrane fuel cell, in which the affinity at the joining interface between the hydrocarbon anion-exchange membrane and the catalyst layer is good, a high cell output is obtained even when the humidity of the oxidant gas supplied to the side of the cathode is low, and a high cell output is stably obtained even when operation is continued with the use of the oxidant gas under a low humidity for a long time. Furthermore, an object of the present invention is to provide an MEA formed with the use of the catalyst layer, the anion-exchange membrane fuel cell including the MEA, and a method for operating the same.

**Solution to Problem**

As a result of an ardent study to solve the above described problem, the inventors have found that composing the catalyst layer for the MEA, which composes the anion-exchange membrane fuel cell, with the use of a predetermined hydrocarbon anion-exchange resin makes it possible to solve the above described problem, and thus the present invention has been completed.

In other words, the first present invention is a catalyst layer for an anion-exchange membrane fuel cell, which includes a catalyst, and a non-crosslinked hydrocarbon anion-exchange resin that has an anion exchange capacity of from 1.8 to 3.5 mmol/g. In the first invention is included a catalyst layer in which the above described hydrocarbon anion-exchange resin has a Young's modulus (25°C) of from 1 to 300 MPa; a catalyst layer in which the above described hydrocarbon anion-exchange resin has a moisture content of from 35 to 100% under a relative humidity of 90%, and of from 7 to 25% under a relative humidity of 40%; or a catalyst layer in which the above described hydrocarbon anion-exchange resin has a solubility in water at 20°C of 0.3% by mass or more but 1% by mass or less.

The second present invention is an MEA for an anion-exchange membrane fuel cell, which includes a hydrocarbon anion-exchange membrane, and the above described catalyst layer formed on at least one surface of the anion-exchange membrane.

The third present invention is an anion-exchange membrane fuel cell which includes the above described MEA.

The fourth present invention is a method for operating an anion-exchange membrane fuel cell, which generates electricity by supplying air to a cathode chamber of the above described anion-exchange membrane fuel cell. In the fourth present invention, the air supplied to the cathode chamber may include an air that has a relative humidity at an operating temperature of the anion-exchange membrane fuel cell of 70% or less.

**Advantageous Effects of Invention**

The MEA according to the present invention has the catalyst layer according to the present invention formed on at least one surface of the hydrocarbon anion-exchange membrane. The MEA has the non-crosslinked hydrocarbon anion-exchange resin that has an anion exchange capacity of from 1.8 to 3.5 mmol/g held between the hydrocarbon anion-exchange membrane and catalyst particles. Since this hydrocarbon anion-exchange resin has a very large anion exchange capacity of from 1.8 to 3.5 mmol/g, the moisture content is high. Therefore, even in the case where an oxidant gas supplied to the side of a cathode has a low humidity, it is possible to prevent a local dry spot from occurring in the catalyst layer. As a result, the ion conductivity exhibited in the whole catalyst layer is so high that a high cell output is achieved. Furthermore, without installing a moisture supplier such as a humidifier, even in a case where an oxidant gas that has a low humidity is supplied for a long time, the shortage of water which is a reactant in the cathode catalyst layer is hardly caused. Therefore, the above described high cell output is stably maintained.

**Brief Description of Drawings**

Fig. 1 is a schematic diagram showing a basic structure of a solid polymer fuel cell.
Fig. 2 is a schematic diagram showing a basic structure of the MEA according to the present invention.
Fig. 3 is a schematic diagram showing another basic structure of the MEA according to the present invention.

**Description of Embodiments**

(Catalyst layer)

The catalyst layer according to the present invention includes a cathode catalyst or an anode catalyst and an ion conductivity imparting agent. Hereinafter, the catalyst layer including the cathode catalyst and the ion conductivity imparting agent is also referred to as a cathode catalyst layer, and the catalyst layer including the anode catalyst and the ion conductivity imparting agent is also referred to as an anode catalyst layer.

(Ion conductivity imparting agent)

The ion conductivity imparting agent in the present invention is a material composing the catalyst layer for an anion-exchange membrane fuel cell. The ion conductivity imparting agent in the present invention is used so as to be added within the catalyst layer, or to be applied to a joining surface of the catalyst layer when a hydrocarbon anion-exchange membrane and the catalyst layer are joined to each other.

The ion conductivity imparting agent in the present invention has extremely high effects to enhance the conductivity of ions (specifically hydroxide ions or the like generated by a platinum group catalyst or the like included in the catalyst layer) in the catalyst layer or near the joining surface of the catalyst layer with respect to the hydrocarbon anion-exchange membrane, and to keep moisture around the same portion.

The ion conductivity imparting agent in the present invention includes a hydrocarbon anion-exchange resin that has an anion-exchange capacity within a predetermined range. The ion conductivity imparting agent for use in the present invention may also be a solution of the hydrocarbon anion-exchange resin or a suspension thereof.

The hydrocarbon anion-exchange resin incorporated in the ion conductivity imparting agent in the present invention has an anion exchange capacity within a predetermined range, has at least one anion-exchange group in a molecule, is hardly soluble in water, and is an elastic and non-crosslinked hydrocarbon anion-exchange resin. Such a hydrocarbon anion-exchange resin may be synthesized by a publicly known method.

The anion exchange capacity of the hydrocarbon anion-exchange resin is from 1.8 to 3.5 mmol/g, preferably from 1.9 to 3.0 mmol/g, particularly preferably from 2.0 to 2.8 mmol/g. The moisture content of the hydrocarbon anion-exchange resin that has an anion exchange capacity within this range may be increased. Therefore, even when the humidity of an oxidant gas supplied to an oxidant chamber or a fuel gas supplied to a fuel gas chamber is low, a good ion conductivity may be given to the catalyst layer and thus a high output may be obtained. In addition, even when operation is continued under a low humidity for a long term, a high cell output may be stably maintained.

When the anion exchange capacity of the hydrocarbon anion-exchange resin is less than 1.8 mmol/g, the ion conductivity becomes poor. In addition, as the catalyst layer locally dries under a low humidity, the cell output is easy to decrease. On the other hand, when the anion exchange capacity of the hydrocarbon anion-exchange resin is more than 3.5 mmol/g, the swelling due to the absorption of moisture may increase so as to inhibit the diffusion of the fuel or oxidant gas. Furthermore, the solubility in water becomes so high that it is easy to be eluted from the catalyst layer.

When the above described hydrocarbon anion-exchange resin has an anion exchange capacity within the above described range, the moisture content which is measured in accordance with the following method may be adjusted, under a relative humidity of 90%, to be generally from 35 to 100%, preferably from 38 to 90%, particularly preferably from 40 to 80%, and may be adjusted, under a low humidity that is a relative humidity of 40%, to be generally from 7 to 25%, preferably from 8 to 20%, particularly preferably from 9 to 18%.

When the hydrocarbon anion-exchange resin that has such a high moisture content is used for the catalyst layer for the anion-exchange membrane fuel cell, a water to be consumed in the electrode reaction at the cathode may be promptly supplied to the catalytic site. Therefore, even when operation is continued for a long time, continuous operation without causing the water shortage is achievable.

In the present invention, the hydrocarbon anion-exchange resin means an anion-exchange resin most of which, other than an ion-exchange group existing in the molecule, are composed of a hydrocarbon group. However, as long as the effect of the present invention is not inhibited, at the portion other than the anion-exchange group in the molecule may be included an atom in addition to a carbon atom and a hydrogen atom. For example, the atom includes oxygen, nitrogen, silicon, sulfur, boron, phosphorus or the like, which is introduced via a bond for composing a main chain and a side chain of the molecule including not only a carbon-carbon bond and a carbon=carbon bond (double bond) but also an ether bond, an ester bond, an amide bond, a siloxane bond and the like. Such an atom may be included in a total amount of 40% or less, preferably 10% or less, with respect to the total number of atoms composing the molecule. In addition, chlorine, bromine, fluorine, iodine, or another atom may bind to the main chain and the side chain directly or as a substituent group, as long as the amount thereof is 40% or less, preferably 10% or less of the number of hydrogen atoms composing the molecule.

The above described anion-exchange group existing in the hydrocarbon anion-exchange resin is not limited in particular as long as it is a substituent group that has an anion exchanging property, and the example thereof includes a quaternary ammonium base, a pyridinium base, an imidazolium base, a tertiary amino group, or a phosphonium group. Among these, from the point of view of the strong basicity, a quaternary ammonium base or a pyridinium base is preferable.

In addition, the counter ion of the above described anion-exchange group in the hydrocarbon anion-exchange resin is preferably $OH^-$, $HCO_3^-$ or $CO_3^{2-}$, or mixed ions thereof. In the case where the counter ion is the above described ion form, the ion conductivity of the anion-exchange resin may be enhanced, and the electrode reaction at the cathode and the anode may be advanced with a high efficiency. From the points of view of the safety in manipulation of allowing the counter ion to be the above described ion form and the enhanced chemical stability of the anion-exchange resin obtained, $HCO_3^-$ or $CO_3^{2-}$ is particularly preferable as the counter ion.

The above described hydrocarbon anion-exchange resin is required to be hardly soluble in water. In the case of being easily dissolved in water, the hydrocarbon anion-exchange resin is eluted from the catalyst layer when it is used to compose the fuel cell, so that the cell performance decreases. From this, in Patent Literature 6, it is required that a hydrocarbon anion-exchange resin used as the ion conductivity imparting agent has a solubility in water (a concentration of the above described hydrocarbon anion-exchange resin in a saturated solution) at 20°C of less than 1% by mass, preferably 0.8% by mass or less (paragraph [0016]). Specifically, in the Example thereof, as the above described hydrocarbon anion-exchange resin that has an anion-exchange capacity of from 0.8 to 1.3 mmol/g, the one that has a solubility in water at 20°C of from 0.02 to 0.04% by mass is used. In contrast, the hydrocarbon anion-exchange resin for use in the present invention as the ion conductivity imparting agent has a large anion-exchange capacity of from 1.8 to 3.5 mmol/g. However, the anion-exchange capacity in this range has a solubility in water within a tolerance level, that is, although the solubility is generally 0.3% by mass or more, in some cases 0.4% by mass or more, it may be suppressed to be less than 1% by mass (preferably 0.8% by mass or less) as described above. The hydrocarbon anion-exchange resin used as the ion conductivity imparting agent in the present invention is a non-crosslinked type. The non-crosslinked hydrocarbon anion-exchange resin has an excellent dispersibility with the catalyst and may be easily brought into a solution, so that the applicability is high. In addition, the non-crosslinked hydrocarbon anion-exchange resin is so flexible that the joining performance with respect to the hydrocarbon ion-exchange membrane is excellent.

It is preferable for the above described hydrocarbon anion-exchange resin to have a moderate elastic modulus. Specifically, the Young's modulus at 25°C is preferably from 1 to 300 MPa, particularly preferably from 3 to 100 MPa. With an elastic modulus within such a range, the adhesiveness between the hydrocarbon anion-exchange resin and the catalyst layer may be improved. In addition, when it is used to compose the fuel cell, it is possible to disperse the stress generated by a heat cycle, and it is possible to significantly improve the durability of the fuel cell.

The ion conductivity imparting agent in the present invention includes the above described hydrocarbon anion-exchange resin as it is or as a solution or suspension thereof. The ion conductivity imparting agent in the present invention is applied to a surface of the catalyst layer that is to become the joining surface so as to integrate with the catalyst layer, or incorporated into a composition for forming the catalyst layer (described below) including the catalyst (such as a platinum group catalyst). From the points of view where the hydrocarbon anion-exchange resin may be in the catalyst layer or near the joining surface uniformly, and the catalyst layer that has a good joining performance and a high activity may be created, the hydrocarbon anion-exchange resin is preferably included as a solution.

From such a reason, the hydrocarbon anion-exchange resin preferably exhibits the solubility in an organic solvent. The organic solvent is not limited in particular, and may be appropriately selected from the following solvents, for example.

The example of the solvent includes alcohol such as methanol, ethanol, 1-propanol, 2-propanol, 1-butanol, t-butanol, 1-hexanol, cyclohexanol or 2-ethoxyethanol, ketone such as acetone or methyl ethyl ketone, ester such as ethyl acetate or isobutyl acetate, nitrile such as acetonitrile or malononitrile, amide such as N,N-dimethylformamide, N,N-dimethylacetamide or N-methyl-2-pyrrolidinone, sulfoxide such as dimethyl sulfoxide or sulfolane, ether such as diethyl ether, 1,2-dimethoxyethane, tetrahydrofuran or dioxane, hydrocarbon such as hexane, toluene or benzene, chlorinated hydrocarbon such as chloroform or dichloromethane, or the like. These may be used alone or in combination of two or more. In these solvents, water may be contained. From the points of view where a drying manipulation is easy, and the affinity with the hydrocarbon anion-exchange membrane and the dispersibility with the catalyst are good, the solvent is preferably one or a combination of two or more selected from ethanol, 1-propanol, tetrahydrofuran or chloroform.

The solubility of the above described hydrocarbon anion-exchange resin in the organic solvent (the concentration of the above described hydrocarbon anion-exchange resin in a saturated solution at 20°C) is preferably 1% by mass or more, particularly preferably 3% by mass or more. In the case where the ion conductivity imparting agent is in a solution state, the concentration of the above described hydrocarbon anion-exchange resin in the solution is not limited in particular, but is generally from 1 to 20% by mass, preferably from 2 to 15% by mass. The concentration may be appropriately determined depending on the combination of the solvent with the hydrocarbon anion-exchange resin, the used amount with respect to the catalyst, the viscosity, the permeability at the application or the like.

In the case where the above described hydrocarbon anion-exchange resin is used as a suspension, the dispersing medium is not limited in particular, but a solvent in which the hydrocarbon anion-exchange resin is not dissolved among the above described organic solvents or water is used. In addition, the content of the hydrocarbon anion-exchange resin in the suspension is not limited in particular, but is preferably at the same level as in the case of the above described solution state.

The hydrocarbon anion-exchange resin for use in the present invention may be one which is appropriately selected from publicly known conventional anion-exchange resins but which satisfies a specified condition in the present invention, or the synthesized one for use. In general, the solubility in water or the organic solvent and the Young's modulus are controlled depending on the amount of the anion-exchange group existing in the hydrocarbon anion-exchange resin, the molecular weight, the degree of crosslinking, the structure of the main chain of the resin. Therefore, on the occasion of selection of the hydrocarbon anion-exchange resin, it is preferable to make a selection while paying attention to such points. In addition, such factors as described above may be easily adjusted by modifying a synthetic condition in a common synthetic method for a hydrocarbon anion-exchange resin that has an anion-exchange group. The synthetic method for the hydrocarbon anion-exchange resin for use in the present invention is not limited in particular, and the hydrocarbon anion-exchange resin may be easily synthesized by the following method, for example.

The above described hydrocarbon anion-exchange resin can be obtained by polymerizing a monomer that has a functional group into which the anion-exchange group may be introduced or a monomer that has the anion-exchange group with a conjugated diene compound, such that the solution property in the organic solvent and water satisfies the above described condition. Subsequently, in the case where the monomer that has a functional group into which the anion-exchange group may be introduced is used, a treatment for introducing the anion-exchange group is performed. By adjusting the type and combination of the monomer(s) used and the amount thereof; the introduced amount of the anion-exchange group; the degree of polymerization of a polymer, or the like, the above described hydrocarbon anion-exchange resin may be easily synthesized.

The example of the monomer that has a functional group into which the anion-exchange group may be introduced includes an aromatic vinyl compound such as styrene, $\alpha$-methylstyrene, chloromethylstyrene, vinylpyridine, vinylimidazole or vinylnaphthalene. From the point of view of the easy introduction of the anion-exchange group, styrene or $\alpha$-methylstyrene is preferable. The example of the monomer that has the anion-exchange group includes an amino group containing an aromatic vinyl compound such as vinylbenzyl trimethylamine or vinylbenzyl triethylamine; a nitrogen containing heterocyclic monomer such as vinylpyridine or vinylimidazole; a salt and an ester thereof.

The example of the conjugated diene compound includes butadiene, isoprene, chloroprene, 1,3-pentadiene or 2,3-dimethyl-1,3-butadiene. The used amount thereof is not limited in particular, but the content by percentage of the conjugated diene compound unit in the hydrocarbon anion-exchange resin is from 5 to 85% by mass, particularly from 10 to 75% by mass in general.

In addition to the above described monomer that has a functional group into which the anion-exchange group may be introduced, the monomer that has the anion-exchange group, and the conjugated diene compound, another monomer which may copolymerize with these monomers may be added. The example of such another monomer includes a vinyl compound such as ethylene, propylene, butylene, acrylonitrile, vinyl chloride or acrylic ester. The used amount thereof is preferably from 0 to 100 parts by mass with respect to 100 parts by mass of the monomer that has a functional group into which the anion-exchange group may be introduced, or of the monomer that has the anion-exchange group.

As the polymerization method, a publicly known polymerization method such as a solution polymerization, a suspension polymerization or an emulsion polymerization is adopted. The polymerization method is not limited in particular, and may be appropriately selected depending on the monomer composition or the like. In the case where the monomer as exemplified above such as styrene is used, the polymerization is preferably performed in such a polymerization condition that the average molecular weight is to be from 10,000 to 1,000,000, preferably from 50,000 to 400,000.

In the case where the monomer that has an anion-exchange group is used, performing a polymerization in this way may result in the hydrocarbon anion-exchange resin for use in the present invention. In addition, in the case where the monomer that has a functional group into which the anion-exchange group may be introduced is used, introducing into the polymer obtained by such a polymerization a desired anion-exchange group by a variety of publicly known methods such as amination and alkylation may result in the hydrocarbon anion-exchange resin for use in the present invention.

In addition, in accordance with the above described method, a hydrocarbon anion-exchange resin whose counter ion is a halide ion is often obtained. In the present invention, as the ion conductivity imparting agent, the hydrocarbon anion-exchange resin whose counter ion is a halide ion may be used, but a hydrocarbon anion-exchange resin in which the halide ion is preliminarily ion exchanged for $OH^-$, $HCO_3^-$ or $CO_3^{2-}$ is preferably used. In the case where the former ion conductivity imparting agent is used, the catalyst layer or the MEA as described below is prepared, and subsequently the halide ion is ion exchanged for $OH^-$, $HCO_3^-$ or $CO_3^{2-}$. A method for the ion exchange is not limited in particular, and as the method, a publicly known method may be used. For example, immersing in an aqueous solution of sodium hydroxide, potassium hydroxide, sodium carbonate, potassium carbonate, potassium sodium carbonate, ammonium carbonate, sodium hydrogen carbonate, potassium hydrogen carbonate, ammonium hydrogen carbonate or the like, the above described hydrocarbon anion-exchange resin whose counter ion is a halide ion for 2 to 10 hours may be performed. From the points of view of the safety in manipulation and the stability of the anion-exchange resin obtained, an $HCO_3^-$ or $CO_3^{2-}$ form is the most preferable.

In addition, among the above described methods, because the hydrocarbon anion-exchange resin that has a high effect may be easily obtained, a method including performing a block copolymerization in which several types of the monomers from the above described monomers are used to compose a hard segment and a soft segment (in general, a polymerized block by the aromatic vinyl compound composes the hard segment, and a polymerized block by the conjugated diene compound composes the soft segment), thereby producing a so-called thermoplastic elastomer, and subsequently, in the case where the monomer that has a functional group into which the anion-exchange group may be introduced is used, performing the treatment for introducing the anion-exchange group is particularly preferable.

In this case, a combination of monomers to be copolymerized may be determined in accordance with a common synthetic method for the thermoplastic elastomer, and a polymerization may be performed in accordance with a conventional method. The example of the thermoplastic elastomer into which the anion-exchange group may be introduced includes a polystyrene-polybutadiene-polystyrene triblock copolymer (SBS), a polystyrene-polyisoprene-polystyrene triblock copolymer (SIS), a polystyrene-poly(ethylene-butylene)-polystyrene triblock copolymer (SEBS) obtained by a hydrogenation of an SBS, or a polystyrene-poly(ethylene-propylene)-polystyrene triblock (SEPS) copolymer obtained by a hydrogenation of an SIS. The example of the thermoplastic elastomer that has the anion-exchange group includes a polystyrene-polyvinyl pyridine-polybutadiene triblock copolymer, or a polystyrene-polyvinylpyridine-polyisoprene triblock copolymer. Such a combination of monomers for giving a copolymer may be adopted. In addition, as the thermoplastic elastomer into which the anion-exchange group may be introduced, from the point of view of the stability in a step of introducing the ion-exchange group, an SEBS or an SEPS is preferable.

The monomer composition when a polymerization is performed is not limited in particular. From the points of view of the electrical characteristic and the mechanical characteristic, the unit of the aromatic vinyl compound in the block copolymer is preferably from 5 to 70% by mass, particularly preferably from 10 to 50% by mass.

The method for copolymerizing the aromatic vinyl compound with the conjugated diene compound is not limited in particular, and as the method, a publicly known method such as an anion polymerization, a cation polymerization, a coordination polymerization, or a radical polymerization is adopted. Because the block structure is easy to be controlled, a living anion polymerization is preferable in particular. In addition, although the type of the block copolymerization may be any of a diblock copolymerization, a triblock copolymerization, a radial block copolymerization and a multiblock copolymerization, because the end blocks easily cohere to each other so as to form a domain, a triblock copolymerization is preferable. Moreover, because of the easily molding processability as a thermoplastic resin, the polymerization is preferably performed in such a polymerization condition that the average molecular weight of the individual block copolymers is to be from 5,000 to 300,000, in particular from 10,000 to 150,000. When the conjugated diene moiety in the block copolymer is hydrogenated, hydrogen is preferably added such that the additive rate of hydrogen is 95% or more. In the case where the monomer that has a functional group into which the anion-exchange group may be introduced is used, the introduction of the anion-exchange group may be performed in the same way as described above.

In the present invention, the ion conductivity imparting agent is used for the catalyst layer for the anion-exchange membrane fuel cell which uses the hydrocarbon anion-exchange membrane as a solid polymer electrolyte membrane. Because it is possible to promptly supply a moisture to be consumed in the electrode reaction at the cathode for a long period of time without causing the shortage, when it is used for the cathode catalyst layer, the effect is significant in particular.

(Cathode catalyst)

As the cathode catalyst, a publicly known catalyst for promoting a reduction reaction of oxygen is usable without limitation in particular. The example of such a cathode catalyst includes metal particles of platinum, gold, silver, palladium, iridium, rhodium, ruthenium, osmium, tin, iron, cobalt, nickel, molybdenum, tungsten, vanadium, an alloy thereof and the like. Because the catalytic activity is excellent, a platinum group catalyst (ruthenium, rhodium, palladium, osmium, iridium, platinum) or silver is preferably used. These are used as a simple substance or an alloy containing one or more thereof. In the case of an alloy with a non-noble metal, the example of the non-noble metal element includes titanium, manganese, iron, cobalt, nickel or chrome.

As the cathode catalyst, a variety of metal oxides may also be catalytically used. For example, a perovskite type oxide, represented by $ABO_3$, which is excellent in oxidation activity, may also be suitably used. Specifically, the example thereof includes $LaMnO_3$, $LaFeO_3$, $LaCrO_3$, $LaCoO_3$, $LaNiO_3$ or the like; the one in which a part of the above described A site is partially substituted with Sr, Ca, Ba, Ce, Ag or the like; or the one in which a part of the above described B site is partially substituted with Pd, Pt, Ru, Ag or the like.

The particle diameter of these cathode catalysts is generally from 0.1 to 100 nm, preferably from 0.5 to 10 nm. The smaller the particle, the higher the catalyst performance, but it is difficult to prepare those with less than 0.5 nm. With more than 100 nm, it is difficult to obtain a sufficient catalyst performance.

These cathode catalysts may be used as they are or may be used in the state where they are preliminarily supported on a conductive agent. The conductive agent is not limited in particular, as long as it is a substance that has an electronic conductivity, and as the agent, carbon black such as furnace black or acetylene black, activated carbon, or black lead is commonly used alone or a mixture thereof may be used, for example. The content of the catalyst is generally from 0.01 to 10 mg/cm$^2$, preferably from 0.1 to 5.0 mg/cm$^2$, in terms of the mass of metal per unit area in the state where the cathode catalyst layer is formed into a sheet (generally a thickness of from 5 to 50 $\mu$m).

These cathode catalyst particles are mixed with the above described ion conductivity imparting agent, and the binding agent, the dispersing medium or the like as needed, so that a composition for forming the cathode catalyst layer is prepared, and the prepared composition is joined to a surface of the hydrocarbon anion-exchange membrane in a layered state in accordance with a method as described below in detail.

In the composition for forming the cathode catalyst layer, in addition to the cathode catalyst or the conductive agent by which the cathode catalyst is supported, the binding agent, the conductive agent not supporting the cathode catalyst or the like may be contained. In the case where the ion conductivity imparting agent for use in the present invention is in a solution state, to the composition for forming the cathode catalyst layer, the same solvent for adjustment of the supported amount of the catalyst or for adjustment of the membrane thickness of the cathode catalyst layer as the above described solvent used for the ion conductivity imparting agent may be further added, in preparation of the composition, in order to adjust the viscosity. Furthermore, for the purpose of preventing the heat generation or the like by a contact of the catalyst with the organic solvent, the conductive agent by which the catalyst is supported and water may be mixed with each other and then the mixture may be mixed with the above described ion conductivity imparting agent.

The binding agent is a substance for forming the cathode catalyst layer and keeping the shape, and as the agent, a thermoplastic resin is used in general. The example of the thermoplastic resin includes polytetrafluoroethylene, polyvinylidene fluoride, a tetrafluoroethylene-perfluoroalkyl vinyl ether copolymer, polyetheretherketone, polyethersulfone, a styrene-butadiene copolymer, or an acrylonitrile-butadiene copolymer. The content of the binding agent in the cathode catalyst layer is preferably from 0 to 25% by mass with respect to the cathode catalyst layer so as not to disturb the property that the cathode catalyst layer is easily humid. In addition, the content of the binding agent in the cathode catalyst layer is preferably 10 parts by mass or less with respect to 100 parts by mass of the catalyst particles. The binding agent may be used alone or a mixture of the two or more types thereof may be used. As the conductive agent not supporting the cathode catalyst, the above exemplified conductive agent by which the catalyst is supported is usable.

In the composition for forming the cathode catalyst layer, preferably 1 to 70% by mass, particularly preferably 2 to 50% by mass ion conductivity imparting agent described above are contained. In addition, in the composition for forming the cathode catalyst layer, preferably 0.5 to 99% by mass, particularly preferably 1 to 97% by mass cathode catalyst, expressed in terms of the metal, are contained. In the case where the cathode catalyst supported on the conductive agent is used, the content of the conductive agent is not limited, as long as the content of the cathode catalyst is within the above described range. In the composition for forming the cathode catalyst layer, the ratio of the cathode catalyst (in the case where the cathode catalyst is supported on the conductive agent, the total mass of the conductive agent and the cathode catalyst is considered) to the ion conductivity imparting agent (the cathode catalyst/the ion conductivity imparting agent) is preferably from 99/1 to 20/80, more preferably from 98/2 to 40/60 by a mass ratio.

The method for preparing the composition for forming the cathode catalyst layer is not limited in particular, and as the method, a publicly known method in the field is adopted. The example thereof includes a method for preparing the composition for forming the cathode catalyst layer, including mixing the above described ion conductivity imparting agent, the catalyst or the conductive agent by which the catalyst is supported and the like, and mixing and dispersing the mixture for 1 to 24 hours by stirring with the use of a stirrer, a ball mill, a kneader or the like, and by ultrasonic dispersion or the like.

The cathode catalyst layer according to the present invention is prepared by forming the above described composition for forming the cathode catalyst layer in a desired shape and subsequently removing the solvent. The method for forming the cathode catalyst layer according to the present invention is not limited in particular, and as the method, a publicly known method in the field is adopted.

The example thereof includes a method including applying the above described composition for forming the cathode catalyst layer to a supporting material and drying the applied composition, a method including applying the above described composition for forming the cathode catalyst layer to a release sheet made of polytetrafluoroethylene or the like and drying the applied composition, or a method including directly applying the above described composition for forming the cathode catalyst layer to the hydrocarbon anion-exchange membrane and drying the applied composition. As the drying method, a generally known method including standing the same at a room temperature, air drying the same at a temperature of the boiling point or less of the organic solvent, or the like may be used without limitation.

The cathode catalyst layer according to the present invention may also be formed by printing the composition for forming the cathode catalyst layer in accordance with a method such as a screen printing, a gravure printing or a spray print, and subsequently drying the printed composition.

The drying time is generally around from 0.1 to 24 hours at a room temperature, although it depends on the solvent included in the composition for forming the cathode catalyst layer. If necessary, drying may be performed at a reduced pressure for around 0.1 to 5 hours.

The applying or the printing is generally performed such that the thickness of the cathode catalyst layer after the drying becomes from 5 to 50 $\mu$m. In addition, the content of the above described ion conductivity imparting agent in the cathode catalyst layer is generally from 0.01 to 5 mg/cm$^2$, preferably from 0.1 to 3.0 mg/cm$^2$, in terms of the mass per unit area in the state where the cathode catalyst layer is formed into a sheet.

As the supporting material, a porous material is used. Specifically, a woven fabric or a nonwoven fabric of a carbon fiber, carbon paper or the like is used. The thickness of the supporting material is preferably from 50 to 300 $\mu$m, and the percentage of void thereof is preferably from 50 to 90%. These supporting materials may be applied with a water repellent treatment in accordance with a publicly known conventional method. Furthermore, a conductive multi porous layer (hereinafter, referred to as "MPL"), which is composed of the above described conductive agent by which the catalyst is supported and the binding agent such as polytetrafluoroethylene that has a water repellent effect, may be used after being formed on a surface thereof on which the catalyst layer is to be formed. In particular, the supporting material on which the MPL is formed is preferably used at the side of the anode where water is generated in the electrode reaction. These supporting materials have an electron conductivity and thus play a role in transmitting the output of the fuel cell from the catalyst layer to the outside. In the case where the composition for forming the cathode catalyst layer is supported by the supporting material, it is filled in and attached to the void and the joining surface thereof with respect to the anion-exchange membrane.

As the release sheet, a resin sheet that has an excellent releasability and a smooth surface is preferably used. A sheet of polytetrafluoroethylene or polyethylene terephthalate that has a thickness of from 50 to 200 $\mu$m is particularly preferable.

(Anode catalyst)

The anode catalyst layer according to the present invention includes the anode catalyst and the ion conductivity imparting agent. As the anode catalyst, a publicly known catalyst for promoting an oxidation reaction of a fuel such as hydrogen or methanol is usable without limitation in particular. The example of such an anode catalyst includes metal particles of platinum, gold, silver, palladium, iridium, rhodium, ruthenium, osmium, tin, iron, cobalt, nickel, molybdenum, tungsten, vanadium, an alloy thereof or the like. These elements are used as a single substance or an alloy containing one or more thereof as a component. Because the catalytic activity is excellent, a platinum group catalyst (ruthenium, rhodium, palladium, osmium, iridium or platinum) or an alloy of the platinum group catalyst with a non-noble metal is preferably used. In the case of the alloy with a non-noble metal, the example of the non-noble metal element includes titanium, manganese, iron, cobalt, nickel or chrome.

In addition, the ion conductivity imparting agent for use in forming the anode catalyst layer is not limited in particular. For example, the hydrocarbon anion-exchange resin that has an anion exchange capacity of from 0.5 to 1.5 mmol/g as disclosed in Patent Literature 7 or the like may be used, but the above described ion conductivity imparting agent is preferably used. Furthermore, various kinds of the requirements described as to the cathode catalyst layer are also applied in the formation of the anode catalyst layer.

(MEA)

The MEA for the anion-exchange membrane fuel cell according to the present invention includes a structure composed of the hydrocarbon anion-exchange membrane and the catalyst layer formed on at least one surface of the hydrocarbon anion-exchange membrane.

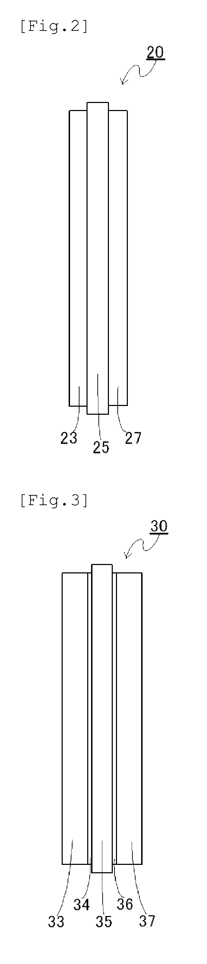

Fig. 2 is a schematic diagram showing a basic structure of the MEA according to the present invention. In Fig. 2, a reference sign 20 represents the MEA, and a reference sign 25 represents the hydrocarbon anion-exchange membrane. On one surface of the hydrocarbon anion-exchange membrane 25, the anode catalyst layer 23 is formed. On another surface of the hydrocarbon anion-exchange membrane 25, the cathode catalyst layer 27 is formed. At least one of the cathode catalyst layer 27 and the anode catalyst layer 23 is the catalyst layer according to the present invention.

Fig. 3 is a schematic diagram showing another basic structure of the MEA according to the present invention. In Fig. 3, a reference sign 30 represents the MEA, and a reference sign 35 represents the hydrocarbon anion-exchange membrane. On one surface of the hydrocarbon anion-exchange membrane 35, the anode catalyst layer 34 is formed. On another surface of the hydrocarbon anion-exchange membrane 35, the cathode catalyst layer 36 is formed. At least one of the cathode catalyst layer 36 and the anode catalyst layer 34 is the catalyst layer according to the present invention. In Fig. 3, reference signs 33 and 37 represent gas diffusion layers.

(i) Hydrocarbon anion-exchange membrane

In the present invention, as the hydrocarbon anion-exchange membrane (hereinafter, sometimes abbreviated to "anion-exchange membrane"), a publicly known anion-exchange membrane may be used. In particular, an anion-exchange membrane that has a porous membrane as a base material whose void portion is filled with the anion-exchange resin is preferably used. Using the anion-exchange membrane that has such a porous membrane as a base material may enhance the physical strength of the anion-exchange membrane without giving up the electrical resistance, because the porous membrane acts as a reinforcing member.

In the present invention, as the porous membrane that is to be a base material of the anion-exchange membrane, a publicly known membrane usable as a substrate of an ion-exchange membrane may be used without limitation. The specific example thereof may include a porous film, a nonwoven fabric, a woven fabric, paper, nonwoven paper, an inorganic membrane or the like. The material of these porous membranes is not limited in particular, and as the material, a thermoplastic resin, a thermosetting resin, an inorganic substance and a mixture thereof may be used. Among these porous membranes, from the points of view where the production is easy, the mechanical strength, the chemical stability and the chemical resistance are excellent, the affinity with the anion-exchange resin is good, and the like, a porous membrane composed of polyolefin (hereinafter also referred to as "polyolefin porous membrane") is preferably used.

The example of such a polyolefin porous membrane includes those produced from polyolefin obtained by a homopolymerization, a copolymerization or the like of α-olefin such as ethylene, propylene, 1-butene, 1-pentene, 1-hexene, 3-methyl-1-butene, 4-methyl-1-pentene, or 5-methyl-1-heptene. Among these, the porous membrane composed of polyethylene or polypropylene is preferable, and the porous membrane composed of polyethylene is particularly preferable.

Such a polyolefin porous membrane may be obtained in accordance with a method disclosed in for example JP 1997-216964 A, JP 2002-338721 A or the like, or may be obtained as a commercial product of for example a commercial name "Hipore" from Asahi Kasei, a commercial name "PORE" from Ube Industries, Ltd., a commercial name "SETELA" from Toray Battery Separator Film Co., Ltd., a commercial name "EXEPOL" from Mitsubishi Plastics, Inc. or the like.

Taking into consideration the smallness of the membrane resistance or the mechanical strength of the obtained anion-exchange membrane, the mean pore diameter of such a polyolefin porous membrane is generally from 0.005 to 5.0 μm, more preferably from 0.01 to 1.0 μm, most preferably from 0.015 to 0.4 μm. In addition, because of the same reason as in the case of the above described mean pore diameter, the percentage of void of the polyolefin porous membrane is generally from 20 to 95%, preferably from 30 to 80%, most preferably from 30 to 50%.

Furthermore, the membrane thickness of the porous membrane that is to be a base material of the anion-exchange membrane is generally from 3 to 200 $\mu$m, preferably from 5 to 60 $\mu$m from the point of view of obtaining the membrane that has a smaller membrane resistance or the like, most preferably from 7 to 40 $\mu$m taking into consideration a balance between the low permeability of the fuel such as hydrogen and the required mechanical strength.

The anion-exchange resin filled in the void portion of the porous membrane is not limited in particular, but taking into consideration the affinity, the adhesiveness and the like with the porous membrane, the resin portion other than the anion-exchange group is preferably composed of a crosslinked hydrocarbon polymer. Herein, the hydrocarbon polymer refers to a polymer which does not include a carbon-fluorine bond substantially, but has a carbon-carbon bond of which most bonds of a main chain and a side chain composing the polymer are composed. In the interval of the carbon-carbon bond of this hydrocarbon polymer, a small number of other atoms such as oxygen, nitrogen, silicon, sulfur, boron and phosphorus may be included via an ether bond, an ester bond, an amide bond, a siloxane bond or the like. In addition, not all of atoms binding to the above described main chain and side chain have to be hydrogen atoms, but a small number of hydrogen atoms may be substituted with other atoms such as chlorine, bromine, fluorine and iodine, and a substituent group including the other atoms. It is preferable that the amount of these elements other than carbon and hydrogen be 40 mol % or less, preferably 10 mol % or less in all of the elements other than the anion-exchange group composing the resin (the polymer).

In the present invention, the anion-exchange group in the anion-exchange membrane (the anion-exchange group which the anion-exchange resin to be filled in the void portion of the porous membrane has) is not limited in particular, but taking into consideration the ease of the production, the availability and the like, a quaternary ammonium base or a pyridinium base is preferable.

The specific producing method for the anion-exchange membrane is exemplified below. First of all, the polymerizable composition including a polymerizable monomer that has a halogeno alkyl group (for example, chloromethylstyrene, bromomethylstyrene or iodomethylstyrene), a crosslinkable and polymerizable monomer (for example, a divinylbenzene compound) and an effective amount of a polymerization initiator (for example, an organic peroxide) is come into contact with the above described porous membrane, so that the void portion of the porous membrane is filled with the polymerizable composition. Thereafter, the polymerizable composition filled in the void portion is polymerized and cured, and subsequently the halogeno alkyl group is converted to the above described anion-exchange group, so that the anion-exchange membrane may be produced (hereinafter, also referred to as "contact and polymerization method"). In addition, in this contact and polymerization method, an epoxy compound or the like may also be incorporated into the above described polymerizable composition.

Another producing method for the anion-exchange membrane is exemplified below. In the above described contact and polymerization method, instead of the polymerizable monomer that has a halogeno alkyl group, the polymerizable monomer that has a functional group into which a halogeno alkyl group may be introduced such as styrene is used, and as described above, to polymerize and cure the polymerizable composition. Thereafter, a halogeno alkyl group is introduced into the functional group into which a halogeno alkyl group may be introduced, and subsequently the introduced halogeno alkyl group is changed to the anion-exchange group, so that the anion-exchange membrane may be produced.

Furthermore, another producing method for the anion-exchange membrane is exemplified. In the above described contact and polymerization method, instead of the polymerizable monomer that has a halogeno alkyl group, the polymerizable monomer into which the anion-exchange group has been introduced is used, and as described above, the polymerizable composition is polymerized and cured, so that the anion-exchange membrane may be produced.

In the present invention, the anion-exchange membrane is preferably produced in accordance with the above described contact and polymerization method in order that the obtained membrane may have a sufficient adhesiveness and ion exchange capacity, and the permeation of the fuel may be sufficiently suppressed.

When the anion-exchange membrane is produced in accordance with the above described producing method, the counter ion of the anion-exchange group is achieved as a halide ion in many cases. In such cases, the anion-exchange membrane that has the halide ion as the counter ion is preferably ion exchanged by for example being immersed in an excessive amount of an alkali aqueous solution, so that the counter ion has an $OH^-$, $HCO_3^-$ or $CO_3^{2-}$ form, or a mixed form thereof. The ion exchanging method does not have a special limitation, and a publicly known method may be adopted depending on the counter ion. The example thereof includes a method including immersing the above described hydrocarbon anion-exchange membrane whose counter ion is a halide ion in an aqueous solution of sodium hydroxide, potassium hydroxide, sodium carbonate, potassium carbonate, potassium sodium carbonate, ammonium carbonate, sodium hydrogen carbonate, potassium hydrogen carbonate, ammonium hydrogen carbonate or the like for 2 to 10 hours. From the points of view of the safety in manipulation and the stability of the anion-exchange membrane obtained, an $HCO_3^-$ or $CO_3^{2-}$ form is the most preferable for the counter ion.

In the present invention, the anion-exchange membrane has an anion exchange capacity of generally from 0.2 to 3 mmol/g, preferably from 0.5 to 2.5 mmol/g. In addition, in order to prevent the decrease in the anion conductivity easily due to drying, it is preferable that the moisture content at 25°C be adjusted to be 7% by mass or more, preferably around from 10 to 90% by mass. As to the membrane thickness, from the point of view of suppressing the electrical resistance to a lower level and the point of view of giving a mechanical strength required for the supporting membrane, the membrane that has a thickness of generally from 5 to 200 $\mu$m is preferable, and the membrane that has a thickness of from 10 to 100 $\mu$m is more preferable. The breaking strength is preferably 0.08 MPa or more. The anion-exchange membrane for use in the present invention that has these properties has a membrane resistance in 0.5 mol/L-sodium chloride aqueous solution at 25°C of generally from 0.05 to 1.5 $\Omega\cdot$cm$^2$, preferably from 0.1 to 0.5 $\Omega\cdot$cm$^2$ (as to the measuring method, see JP 2007-188788 A).

(ii) Gas diffusion layer

On each of the catalyst layers of the MEA according to the present invention, the gas diffusion layer may be formed. In the case where each of the catalyst layers is not the catalyst layer formed on the supporting material as described above, on each of the catalyst layers, the gas diffusion layer is preferably formed further. As the gas diffusion layer, a porous membrane such as a carbon fiber woven fabric or carbon paper is generally used. These gas diffusion layers have a thickness of preferably from 50 to 300 $\mu$m, and a percentage of void of preferably from 50 to 90%.

In addition, these gas diffusion layers, in the same way as in the case of the supporting material of the catalyst layer, may be applied with a water repellent treatment, or may be provided with an MPL on a surface facing the catalyst layer. In particular, the gas diffusion layer used at the side of the anode is preferably applied with a water repellent treatment or provided with an MPL. In addition, in the case where, as each of the catalyst layers, the catalyst layer formed on the supporting material is used, the one may be used without the gas diffusion layer being formed further because the supporting material acts as the gas diffusion layer.

(iii) Producing method for MEA

The method for joining the anion-exchange membrane to the catalyst layer is not limited in particular, and a publicly known method in the field is adopted.

The example thereof includes a method including directly applying the above described composition for forming the catalyst layer to the anion-exchange membrane and drying the applied composition, a joining method including applying the above described composition for forming the catalyst layer to a surface of the supporting material composed of the gas diffusion layer, thereby forming the gas diffusion layer that has the catalyst layer and laminating the formed gas diffusion layer on the anion-exchange membrane, a method including applying to the above described release sheet thereby preparing the catalyst layer, and thermocompression bonding and transferring the prepared catalyst layer to the anion-exchange membrane, or the like.

In other words, the MEA according to the present invention is an MEA that has the catalyst layer according to the present invention on at least one surface of the anion-exchange membrane. Because the catalyst layer composing the MEA according to the present invention is formed with the use of the predetermined ion conductivity imparting agent, the MEA according to the present invention may further improve the ion conductivity and the durability. Therefore, the anion-exchange membrane fuel cell formed with the use of the MEA according to the present invention has a higher cell output and durability.

In the present invention, a specific producing method for the MEA is described.

First of all, as described above, a method for preparing the MEA according to the present invention including directly applying the composition for forming the catalyst layer to the anion-exchange membrane is included. In addition, a method for preparing the MEA according to the present invention including laminating the catalyst layer according to the present invention in which a surface thereof for supporting the catalyst faces the anion-exchange membrane, and, if necessary, a thermocompression bonding is performed within a temperature range from 40 to 200°C, preferably from 60 to 180°C, more preferably from 80 to 150°C is included. In the event of the laminating, between the anion-exchange membrane and the catalyst layer according to the present invention, the predetermined ion conductivity imparting agent may also be applied further. In addition, the catalyst layer which does not contain the ion conductivity imparting agent may be preliminarily prepared, and between the anion-exchange membrane and this catalyst layer, the predetermined ion conductivity imparting agent may be held such that they are joined to each other.

The thermocompression bonding is performed with the use of a pressing and heating device such as a hot pressing machine or a roll pressing machines. In addition, the above described temperature range is within preset temperatures of the hot plate which performs the thermocompression bonding. The pressure when the thermocompression bonding is performed is preferably within the range from 1 to 20 MPa. The time of thermocompression bonding is not limited in particular.

The MEA obtained in accordance with the above described method may be incorporated into the anion-exchange membrane fuel cell by a publicly known method. In addition, the obtained anion-exchange membrane fuel cell may exhibit an excellent durability, and may also maintain a high output voltage, as described in the following Examples.

(Anion-exchange membrane fuel cell)

The anion-exchange membrane fuel cell according to the present invention includes the above described MEA.
For example, the MEA prepared as described above is installed in the anion-exchange membrane fuel cell that has the above described basic structure as shown in Fig. 1.

(Method for operating anion-exchange membrane fuel cell)

A description is made of a method for operating the anion-exchange membrane fuel cell according to the present invention, taking a solid polymer electrolyte fuel cell that has the above described basic structure as shown in Fig. 1 as an example. In the fuel cell, a fuel is supplied through the fuel flow hole 2 to the fuel gas chamber 7, while an oxygen containing gas is supplied through the oxidant gas flow hole 3 to the oxidant chamber 8, causing an electricity generation state. Herein, because the lower the content of carbon dioxide included in the fuel and the oxygen containing gas supplied, the higher output is achieved, carbon dioxide is preferably removed by a publicly known conventional method before being supplied to the fuel cell. This is because when carbon dioxide is included in the supplied gas, the carbon dioxide dissolves in the anion-exchange resin in the anion-exchange membrane and the catalyst layer, so that the decrease in the output is caused by the decrease in the ion conductivity of the electrolyte.
To the fuel gas chamber 7, a fuel gas such as hydrogen gas is supplied. The fuel gas may be diluted with an inert gas such as nitrogen or argon in order to be supplied. In addition, the relative humidity of the fuel gas is not limited in particular, but is around from 0 to 95% RH at an operating temperature of the fuel cell. In order to downsize the fuel cell and keep cost down, it is preferable to prevent the rising of the moistened degree in the fuel gas such as hydrogen gas. In this case, the relative humidity of the fuel gas is from 0 to 80% RH. The rate of supply to the fuel gas chamber of the fuel gas is generally within the range from 1 to 1000 ml/min per $cm^2$ of area of the electrode.
The oxidant gas supplied to the oxidant chamber 8 may be any gas as long as it contains oxygen, and a publicly known conventional oxygen containing gas may be used. The oxidant gas may be a gas composed of only oxygen, or a mixed gas of oxygen and another inert gas. The example of the inert gas includes nitrogen or argon. The content of oxygen in the mixed gas is preferably 10% by volume or more, particularly preferably 15% by volume or more. In addition, it is preferable that the content of oxygen be higher because it results in the higher output. The example of such a mixed gas includes air.
In the present invention, the relative humidity of the oxidant gas is not limited in particular, but at an operating temperature of the fuel cell, is around from 30 to 100% RH.
In general, in the anion-exchange membrane fuel cell, the relative humidity of the oxidant gas supplied to the oxidant chamber is adjusted to be from 80 to 100% RH with the use of a humidifier or the like. This is because when the relative humidity of the oxidant gas supplied to the oxidant chamber is less than 80% RH, the anion-exchange membrane dries so that the electrical resistance becomes higher, with the result that the cell output may decrease. In addition, in the case of the anion-exchange membrane fuel cell, as described above, at the cathode catalyst layer, oxygen and water react with each other so as to generate a hydroxide ion. The water is not only supplied from the oxidant gas supplied to the oxidant chamber, but also supplied from the anion-exchange membrane. In order to operate the fuel cell so as to achieve a high output, the oxidant gas supplied to the above described oxidant chamber preferably has a high relative humidity.
On the other hand, in the anion-exchange membrane fuel cell according to the present invention, the catalyst layer composing the MEA includes the non-crosslinked hydrocarbon anion-exchange resin that has an anion exchange capacity of from 1.8 to 3.5 mmol/g. In addition, the hydrocarbon anion-exchange resin takes more moisture included in the supplied fuel gas or the oxidant gas so as to keep the humid condition of the catalyst layer high. Therefore, in the anion-exchange membrane fuel cell according to the present invention, the relative humidity of the fuel gas and the oxidant gas supplied to the fuel gas chamber and the oxidant chamber is not limited in particular, and, for example, the relative humidity in an operating condition of the fuel cell may be 70% or less. In the case where air is used as the oxidant gas, in order to downsize the fuel cell and keep cost down, it is preferable that the atmosphere be taken as it is, or a humidifier be operated such that the electric power consumption is suppressed. The relative humidity of the oxidant gas in this case becomes from 10 to 60% RH at an operating temperature of the fuel cell.
Taking the higher output and the durability of the material used into consideration, the operating temperature is from 0 to 90°C, more preferably from 30 to 80°C (the cell temperature).
The operation of the anion-exchange membrane fuel cell under the above described requirement may be in any manner of a constant current operation, a constant voltage operation, and further a load fluctuation operation. Even in any manner, at the start of the operation, a high electric generating capacity is achieved. For example, in a constant current operation, the cell achieves an output voltage of generally 0.2 V or more, more preferably 0.3 V or more.

**Examples**

Hereinafter, a description is made of the present invention with reference to Examples and Comparative Examples, but the present invention is not limited to these Examples. In addition, the property of an ion conductivity imparting agent as indicated in the Examples and the Comparative Examples is represented as a value measured by the following methods.

(1) Anion exchange capacity

A cast film was prepared by casting a solution in which an ion conductivity imparting agent is dissolved (a concentration of 5.0% by mass, a solution amount of 2.5 g, a hydrogencarbonate ion type) on a petri dish from Teflon (registered trademark). A visking tube (purchased from AS ONE Corporation) was washed with ion exchanged water, and then the washed tube was dried at a reduced pressure at 50°C for 3 hours in order to measure the mass ($D_v(g)$). In this visking tube, the prepared cast film was stuffed along with ion exchanged water, and then both ends were tied up. A manipulation of immersing this tube in 0.5 mol/L-HCl aqueous solution (50 mL) for 30 minutes or more was repeated 3 times in order to change the counter ion of the cast film to chloride ion. Furthermore, a manipulation of immersing the tube in ion exchanged water (50 mL) was repeated 10 times, and the cast film thereinside was washed. Subsequently, a manipulation of immersing this tube in 0.2 mol/L-NaNO$_3$ aqueous solution (50 mL) for 30 minutes or more was repeated 4 times in order to change the counter ion of the cast film to nitrate ion and free chloride ions were extracted. Furthermore, a manipulation of immersing this tube in ion exchanged water (50 mL) for 30 minutes or more was repeated twice in order to collect the extracted chloride ions. All of these solutions containing the chloride ions were collected, and the chloride ions contained in these solutions were quantified with an aqueous solution of silver nitrate with the use of a potentiometric titrator (COMTITE-900, made by Hiranuma Sangyo Corporation) (A mol). Subsequently, this tube was immersed in 0.5 mol/L-NaCl aqueous solution (50 g) for 30 minutes or more, the immersed tube was then washed enough with ion exchanged water, the washed tube was held in a dryer at 50°C for 15 hours in order to remove the moisture in the tube, and then the tube with the moisture removed was dried at a reduced pressure at 50°C for 3 hours, so that the mass thereof was measured ($D_t(g)$). Based on the above described measurement values, the ion exchange capacity was obtained from the following formula:

$$\text{Anion exchange capacity [mmol/g-dry mass]} = A \times 1000/(D_t - D_v).$$

(2) Moisture content

A cast film composed of an anion-exchange resin that had a membrane thickness of around from 50 to 70 $\mu$m was prepared by the same method as described above. This cast film was set in a measuring device having a constant temperature and moisture chamber equipped with a magnetic floating type balance (made by BEL Japan Inc., "MSB-AD-V-FC"). First of all, the mass of membrane after the drying at a reduced pressure at 50°C for 3 hours was performed was measured ($D_{dry}(g)$). Subsequently, the temperature of the constant temperature chamber was adjusted to be 40°C and the relative humidity in the chamber was kept at 40%, and the mass of membrane at the time when the mass change of membrane was equal to or less than 0.02%/60 seconds was measured ($D_{40\%}(g)$). Furthermore, the humidity in the chamber was changed to and kept at 90%, and in the same way, the mass of membrane at the time when the mass change of membrane was equal to or less than 0.02%/60 seconds was measured ($D_{90\%}(g)$). Based on the above described measurement values, each of the moisture contents was obtained from the following formulae:

$$\text{Moisture content [\%] under a relative humidity of 40\%} = ((D_{40\%} - D_{dry})/D_{dry}) \times 100$$

$$\text{Moisture content [\%] under a relative humidity of 90\%} = ((D_{90\%} - D_{dry})/D_{dry}) \times 100.$$

(3) Solubility in water at 20°C

A cast film composed of an anion-exchange resin that had a membrane thickness of around from 50 to 70 $\mu$m was prepared by the same method as described above. This cast film was dried at a reduced pressure at 50°C for 3 hours in order to measure the mass of membrane ($D_{dry1}$(g)). Subsequently, this membrane was immersed and kept in water at 20°C for 15 hours. Thereafter, the membrane was taken out from the water, and dried at a reduced pressure at 50°C for 3 hours in order to measure the mass of membrane ($D_{dry2}$(g)). Based on the above described measurement values, the solubility in water at 20°C was obtained from the following formula:

$$\text{Solubility in water [\%]} = ((D_{dry1} - D_{dry2})/D_{dry1}) \times 100.$$

(4) Young's modulus (MPa) at 25°C under relative humidity of 50%

A cast film composed of an anion-exchange resin that had a membrane thickness of around 100 $\mu$m was prepared by the same method as described above. This cast film was cut out into a strip shape to be 15 mm in width $\times$ 70 mm in length, and the cut film was attached to a measuring tool such that the distance between chucks became 35 mm. This was attached to an autograph (AGS-500NX) equipped with a constant temperature and moisture chamber made by Shimadzu Corporation. After the inside of the constant temperature and moisture chamber was adjusted to be at 25°C under a relative humidity of 50%, and such an atmosphere was kept stable for 15 minutes, a tension test was performed at a rate of pulling of 1 mm/min. From an obtained stress-strain curve, the Young's modulus (MPa) was calculated.

(5) Fuel cell output

(5-1) Preparation of membrane-electrode assembly

4.3 g of a solution in which an ion conductivity imparting agent was dissolved (a concentration of 5.0% by mass, a hydrogencarbonate ion type), 0.5 g of platinum supporting carbon (a catalyst for a fuel cell made by Tanaka Kikinzoku Kogyo, a product name: TEC10E50E, a content of platinum of 50% by mass), 0.35 g of ion exchanged water and 0.5 g of 1-propanol were mixed and stirred until the mixture was uniformly pasted, so that a composition for forming a catalyst layer was prepared. This composition for forming a catalyst layer was uniformly screen printed to an anion-exchange membrane as described in Example 5 of WO 2008/120675 A1 (an ion exchange capacity of 2.1 mmol/g, Tokuyama Corporation) such that the mass of deposit per unit area of platinum became 0.5 mg/cm$^2$, and the printed composition was dried for 15 hours at a room temperature, so that a cathode catalyst layer was formed on the anion-exchange membrane. The cathode catalyst layer has a platinum supporting carbon/ion conductivity imparting agent = 70/30 (mass ratio), and a mass of deposit per unit area of the ion conductivity imparting agent of 0.43 mg/cm$^2$. In addition, with the use of a solution in which an ion conductivity imparting agent was dissolved (a concentration of 5.0% by mass, a hydrogencarbonate ion type), on a back surface of the anion-exchange membrane, an anode catalyst layer (0.5 mg-platinum/cm$^2$) was formed in the same way, so that an MEA was obtained. The area of each of the catalyst layers was 5 cm$^2$.

(5-2) Preparation of anion-exchange membrane fuel cell

The MEA obtained by the above described method was immersed in 3 mol/L of an aqueous solution of sodium hydroxide for 30 minutes so as to exchange a counter ion of the anion-exchange resin in the anion-exchange membrane and the catalyst layer for a hydroxide ion, and this exchanged MEA was washed well with ion water. This MEA was held between 2 sheets of carbon paper (Toray Industries, Inc., TGP-H-060), and the held MEA was incorporated into a fuel cell that was in conformity with the JARI (Japan Automobile Research Institute) standard cell. For a cell partition wall, a carbon block provided with a serpentine type flow path was used.

(5-3) Electricity generation test

The cell temperature was set to be 60°C. In such a condition that a hydrogen under a predetermined humidity at an atmospheric pressure was supplied to an anode chamber at 100 ml/min, and an air under a predetermined humidity at an atmospheric pressure from which carbon dioxide had been removed (a concentration of carbon dioxide of 0.1 ppm or less) was supplied to a cathode chamber at 200 ml/min, a continuous electricity generation test was conducted at a constant current density of 400 mA/cm$^2$. A point in time when the electricity generation for 5 hours had been performed under the above described condition was regarded as a point in time when operation was started, and an output at the point in time was regarded as an initial output (mW/cm$^2$). Furthermore, an output after 30 hours from the point in time when operation was started was measured. With the use of these measurement values, the output decreasing rate was obtained from the following formula:

$$\text{Output decreasing rate } [\%/hr] = ((\text{initial output} - \text{output after 30 hours})/\text{initial output} \times 100)/30,$$

as an index of the output durability.

(Production Example 1)

Forty grams of a commercial polystyrene-poly(ethylene-butylene)-polystyrene triblock copolymer (SEBS) (a weight average molecular weight of 70,000, a styrene content of 42% by mass) (containing 161 mmol of a benzene ring) were dissolved in a mixed solvent composed of 520 g of chloroform and 760 g of chloromethyl methyl ether (9.4 mol). Furthermore, a solution of 35 g (134 mmol) of tin chloride (IV) dissolved in 83 g of chloroform was added, and the mixture was reacted in a nitrogen atmosphere for 2 hours at 35 to 40°C, so that a chloromethyl group was introduced into a benzene ring of the SEBS. Thereafter, 200 ml of an 1 : 1 mixed solution of 1,4-dioxane and water were charged into the reaction solution in order to stop the reaction. Subsequently, this reaction solution was charged into 6,000 ml of an aqueous solution of methanol, so that a resin was precipitated. This precipitated resin was washed with methanol several times and then the washed resin was dried at 25°C for 15 hours or more, so that 45.5 g of an SEBS that has the benzene ring into which the chloromethyl group was introduced (hereinafter, also referred to as "chloromethyl group containing SEBS" as follows) were obtained.

In addition, the weight average molecular weight of the SEBS used as a raw material was calculated in accordance with a gel permeation chromatography method under the following condition with the use of HLC-8220GPC made by TOSOH Corporation.

    Column temperature: 40°C
    Column: two TSK gel SuperMultipores
    Eluent: tetrahydrofuran
    Detector: RI

Molecular weight measuring method: converted from a calibration curve formed with the use of a polystyrene standard (made by TOSOH Corporation, TSK standard

POLYSTYRENE)

Forty grams of the chloromethyl group containing SEBS obtained by the above described method were immersed in a mixed solution of 823 g of 30% aqueous solution of trimethylamine, 594 g of acetone and 2,560 g of water, and dissolved therein by being stirred at 25°C for 15 hours or more. This solution was charged into 2,000 ml of 1 mol/L hydrochloric acid, so that a resin was precipitated. This precipitated resin was filtered, and the residue was washed with hydrochloric acid twice and then washed with ion exchanged water several times, so that an anion-exchange resin whose counter ion is a halide ion was obtained. This anion-exchange resin was immersed in 4L of 0.5 mol/L aqueous solution of sodium hydrogen carbonate 4 times or more, and the immersed resin was washed with ion exchanged water several times. This resin was washed with 2,000 ml of tetrahydrofuran 5 times, and the washed resin was dried at 25°C for 15 hours or more, so that 51.9 g of an SEBS into which a quaternary ammonium base was introduced with hydrogen carbonate ion for its counter ion (anion-exchange resin) were obtained.

Forty five grams of the anion-exchange resin obtained by the above described method were charged into a mixed solvent of 1,217 g of tetrahydrofuran and 746 g of 1-propanol, and dissolved therein by being stirred at 25°C for 24 hours. A floater (such as a piece of filter paper) included in the solution was removed with the use of a centrifuge, and subsequently the pressure was reduced to 100 hPa with the use of a rotatory evaporator, so that approximately 1,500 g of the solvent were removed at a temperature of 40°C. Thereafter, to this solution was added 1-propanol such that the mass became 746 g. Subsequently, the pressure was reduced to 40 hPa with the use of a rotatory evaporator, so that approximately 700 g of the solvent were removed at a temperature of 40°C. To this solution was added 1-propanol such that the mass became 746 g, and subsequently a gas chromatography measurement of the solution was carried out, so that it was confirmed that a peak of tetrahydrofuran was not detected. The obtained solution (746 g) was uniform, and the concentration of the hydrocarbon anion-exchange resin was 5.7% by mass. To this solution was added 1-propanol (104 g), so that an ion conductivity imparting agent that had a resin concentration of 5.0% by mass was obtained (850 g). The physical property values of this ion conductivity imparting agent were as indicated in Table 1.

In addition, the gas chromatography measurement of the solution was performed with the use of GC-14B made by Shimadzu Corporation under the following condition.

Column temperature: 150°C
Column: Sunpak-A50 C-803
Carrier gas: high purity helium, 60 mL/min
Detector: TCD 230°C, 80 mA
Sample amount: 1 $\mu$L

(Production Example 2)

In the production of the ion conductivity imparting agent according to Production Example 1, the same manipulation as that for Production Example 1 was performed except that the SEBS was changed to one that had a weight average molecular weight of 50,000 and a styrene content of 30% by mass, the amounts of chloroform, chloromethyl methyl ether and tin chloride (IV) for use in the chloromethylation reaction were changed to 768 g, 548 g and 25 g, respectively, and the mixed solvent for use in dissolving an anion-exchange resin was changed to a mixed solvent of 1,000 g of tetrahydrofuran and 1,000 g of 1-propanol, so that an ion conductivity imparting agent was obtained. The physical property values of this ion conductivity imparting agent were as indicated in Table 1.

(Production Example 3)

In the production of the ion conductivity imparting agent according to Production Example 1, except that the reaction time of the chloromethylation reaction was changed to 1.2 hours, the same manipulation as that for Production Example 1 was performed, so that an ion conductivity imparting agent was obtained. The physical property values of this ion conductivity imparting agent were as indicated in Table 1.

(Production Example 4)

In the production of the ion conductivity imparting agent according to Production Example 1, the same manipulation as that for Production Example 1 was performed except that, instead of the SEBS, a commercial polystyrene-poly(ethylene-propylene)-polystyrene triblock copolymer (SEPS) (a weight average molecular weight of 75,000, a styrene content of 65% by mass) was used, the amounts of chloroform, chloromethyl methyl ether and tin chloride (IV) for use in the chloromethylation reaction were changed to 450 g, 1,093 g and 41 g, respectively, the reaction time of the chloromethylation reaction was changed to 1.2 hours, and the mixed solvent for use in dissolving an anion-exchange resin was changed to a mixed solvent of 1,000 g of tetrahydrofuran and 1,000 g of 1-propanol, so that an ion conductivity imparting agent was obtained. The physical property values of this ion conductivity imparting agent were as indicated in Table 1.

(Reference Example 1)

In the production of the ion conductivity imparting agent according to Production Example 1, the same manipulation as that for Production Example 1 was performed except that the SEBS was changed to one that had a weight average molecular weight of 50,000 and a styrene content of 30% by mass, the amounts of chloroform, chloromethyl methyl ether and tin chloride (IV) for use in the chloromethylation reaction were changed to 760 g, 513 g and 10 g, respectively, and the mixed solvent for use in dissolving an anion-exchange resin was changed to a mixed solvent of 1,000 g of tetrahydrofuran and 1,000 g of 1-propanol, so that an ion conductivity imparting agent was obtained. The physical property values of this ion conductivity imparting agent were as indicated in Table 1.

(Reference Example 2)

In the production of the ion conductivity imparting agent according to Production Example 1, the same manipulation as that for Production Example 1 was performed except that the SEBS was changed to one that had a weight average molecular weight of 50,000 and a styrene content of 67% by mass, the amounts of chloroform, chloromethyl methyl ether and tin chloride (IV) for use in the chloromethylation reaction were changed to 450 g, 1,093 g and 41 g, respectively, and the mixed solvent for use in dissolving an anion-exchange resin was changed to a mixed solvent of 1,000 g of tetrahydrofuran and 1,000 g of 1-propanol, so that an ion conductivity imparting agent was obtained. The physical property values of this ion conductivity imparting agent were as indicated in Table 1. A cast film prepared from this ion conductivity imparting agent did not dissolve under a relative humidity of 90%, but dissolved entirely in water at 20°C, so that the evaluation of the fuel cell output was not carried out.

[Table 1]

(TABLE 1)

| | ION EXCHANGE CAPACITY (mmol/g) | MOISTURE CONTENT UNDER RELATIVE HUMIDITY OF 40% (%) | MOISTURE CONTENT UNDER RELATIVE HUMIDITY OF 90% (%) | SOLUBILITY IN WATER AT 20°C (%) | YOUNG'S MODULUS AT 25°C UNDER RELATIVE HUMIDITY OF 50% (MPa) |
|---|---|---|---|---|---|
| PRODUCTION EXAMPLE 1 | 2.6 | 12.7 | 63.7 | 0.6 | 89 |
| PRODUCTION EXAMPLE 2 | 2.0 | 9.7 | 46.4 | 0.4 | 55 |
| PRODUCTION EXAMPLE 3 | 1.9 | 8.7 | 41.0 | 0.4 | 95 |
| PRODUCTION EXAMPLE 4 | 2.9 | 15.3 | 74.8 | 0.9 | 150 |
| REFERENCE EXAMPLE 1 | 1.4 | 6.8 | 29.8 | 0.2 | 61 |
| REFERENCE EXAMPLE 2 | 3.6 | 17.0 | 83.4 | 100 | 180 |

(Example 1)

A cathode catalyst layer was formed with the use of the ion conductivity imparting agent prepared in accordance with Producing Example 1, an anode catalyst layer was formed with the use of the ion conductivity imparting agent in accordance with Reference Example 1, and an MEA was prepared. With the use of the obtained MEA, an anion-exchange membrane fuel cell was prepared, and the electricity generation test was conducted. The relative humidity at 60°C of hydrogen to be supplied to the anode chamber was adjusted to be 70%, and the relative humidity at 60°C of an air from which carbon dioxide had been removed to be supplied to the cathode chamber was adjusted to be 50%. The test results were indicated in Table 2.

(Examples 2 to 5, and Comparative Example 1)

Except that the ion conductivity imparting agent for use in forming the cathode catalyst layer and the anode catalyst layer was changed to ion conductivity imparting agents as indicated in Table 2, MEAs were prepared in the same way as described in Example 1 and then incorporated into fuel cells, and the electricity generation test was conducted. The test results were indicated in Table 2.

[Table 2]

(TABLE 2)

| | ION CONDUCTIVITY IMPARTING AGENT | | CELL OUTPUT (mW/cm$^2$) | | OUTPUT DECREASING RATE (%/hr) |
|---|---|---|---|---|---|
| | SIDE OF CATHODE | SIDE OF ANODE | INITIAL | AFTER 30 HOURS | |
| EXAMPLE 1 | PRODUCTION EXAMPLE 1 | REFERENCE EXAMPLE 1 | 140 | 110 | 0.7 |
| EXAMPLE 2 | PRODUCTION EXAMPLE 2 | REFERENCE EXAMPLE 1 | 132 | 102 | 0.8 |
| EXAMPLE 3 | PRODUCTION EXAMPLE 3 | REFERENCE EXAMPLE 1 | 120 | 80 | 1.1 |
| EXAMPLE 4 | PRODUCTION EXAMPLE 4 | REFERENCE EXAMPLE 1 | 135 | 72 | 1.6 |
| EXAMPLE 5 | PRODUCTION EXAMPLE 1 | PRODUCTION EXAMPLE 3 | 142 | 112 | 0.7 |
| COMPARATIVE EXAMPLE 1 | REFERENCE EXAMPLE 1 | REFERENCE EXAMPLE 1 | 100 | 9 | 3.0 |

Because Comparative Example 1 uses as an ion conductivity imparting agent the ion conductivity imparting agent that has a low ion exchange capacity at the side of the cathode, the water retentivity is low. Therefore, the initial output from the fuel cell is lower than those for Examples 1 to 5, and the output decreasing rate is also larger.

(Example 6)

With the use of the anion-exchange membrane fuel cell prepared in accordance with Example 1, in such a condition that the relative humidity at 60°C of hydrogen to be supplied to the anode chamber was adjusted to be 70%, and the relative humidity at 60°C of an air from which carbon dioxide had been removed to be supplied to the cathode chamber was adjusted to be 60%, the continuous electricity generation test was conducted. The results are indicated in Table 3.

(Example 7)

With the use of the anion-exchange membrane fuel cell prepared in accordance with Example 1, in such a condition that the relative humidity at 60°C of hydrogen to be supplied to the anode chamber was adjusted to be 70%, and the relative humidity at 60°C of an air from which carbon dioxide had been removed to be supplied to the cathode chamber was adjusted to be 30%, the continuous electricity generation test was conducted. The results are indicated in Table 3.

(Comparative Example 2)

With the use of the anion-exchange membrane fuel cell prepared in accordance with Comparative Example 1, in such a condition that the relative humidity at 60°C of hydrogen to be supplied to the anode chamber was adjusted to be 70%, and the relative humidity at 60°C of an air from which carbon dioxide had been removed to be supplied to the cathode chamber was adjusted to be 60%, the continuous electricity generation test was conducted. The results are indicated in Table 3.

(Comparative Example 3)

With the use of the anion-exchange membrane fuel cell prepared in accordance with Comparative Example 1, in such a condition that the relative humidity at 60°C of hydrogen to be supplied to the anode chamber was adjusted to be 70%, and the relative humidity at 60°C of an air from which carbon dioxide had been removed to be supplied to the cathode chamber was adjusted to be 30%, the continuous electricity generation test was conducted. The results are indicated in Table 3.

[Table 3]

(TABLE 3)

| | RELATIVE HUMIDITY AT 60°C OF AIR TO BE SUPPLIED TO CATHODE CHAMBER(%) | ION CONDUCTIVITY IMPARTING AGENT | | CELL OUTPUT (mW/cm$^2$) | | OUTPUT DECREASING RATE (%/hr) |
|---|---|---|---|---|---|---|
| | | SIDE OF CATHODE | SIDE OF ANODE | INITIAL | AFTER 30 HOURS | |
| EXAMPLE 6 | 60 | PRODUCTION EXAMPLE 1 | REFERENCE EXAMPLE 1 | 150 | 118 | 0.7 |
| COMPARATIVE EXAMPLE 2 | 60 | REFERENCE EXAMPLE 1 | REFERENCE EXAMPLE 1 | 105 | 35 | 2.2 |
| EXAMPLE 7 | 30 | PRODUCTION EXAMPLE 1 | REFERENCE EXAMPLE 1 | 110 | 80 | 0.9 |
| COMPARATIVE EXAMPLE 3 | 30 | REFERENCE EXAMPLE 1 | REFERENCE EXAMPLE 1 | 73 | 2 | 3.2 |

As described in paragraph [0108], in the case where the relative humidity of an air from which carbon dioxide has been removed to be supplied to the cathode chamber is less than 80% RH, the anion-exchange membrane dries so that the electrical resistance becomes higher, with the result that the cell output decreases (Comparative Examples 2 and 3). However, in Examples 7 and 8 in which the ion conductivity imparting agent composed of the predetermined anion-exchange resin is used, even in the case where the relative humidity of an air from which carbon dioxide has been removed to be supplied to the cathode chamber is low, the decrease in the cell output is inhibited.

(Example 8)

An anode catalyst layer was formed with the use of the ion conductivity imparting agent prepared in accordance with Producing Example 1, a cathode catalyst layer was formed with the use of the ion conductivity imparting agent in accordance with Reference Example 1, and an MEA was prepared. With the use of the obtained MEA, an anion-exchange membrane fuel cell was prepared, and the electricity generation test was conducted. The relative humidity at 60°C of hydrogen to be supplied to the anode chamber was adjusted to be 40%, and the relative humidity at 60°C of an air from which carbon dioxide had been removed to be supplied to the cathode chamber was adjusted to be 95%. The test results were indicated in Table 4.

(Examples 9 and 10, and Comparative Example 4)

Except that the ion conductivity imparting agent for use in forming the anode catalyst layer was changed to ion conductivity imparting agents as indicated in Table 4, MEAs were prepared in the same way as described in Example 8. With the use of the obtained MEAs, anion-exchange membrane fuel cells were prepared, and the electricity generation test was conducted. The test results were indicated in Table 2.

[Table 4]

(TABLE 4)

| | ION CONDUCTIVITY IMPARTING AGENT | | CELL OUTPUT (mW/cm$^2$) | | OUTPUT DECREASING RATE (%/hr) |
|---|---|---|---|---|---|
| | SIDE OF CATHODE | SIDE OF ANODE | INITIAL | AFTER 30 HOURS | |
| EXAMPLE 8 | REFERENCE EXAMPLE 1 | PRODUCTION EXAMPLE 1 | 138 | 105 | 0.8 |

(continued)

|  | ION CONDUCTIVITY IMPARTING AGENT | | CELL OUTPUT (mW/cm$^2$) | | OUTPUT DECREASING RATE (%/hr) |
|---|---|---|---|---|---|
|  | SIDE OF CATHODE | SIDE OF ANODE | INITIAL | AFTER 30 HOURS |  |
| EXAMPLE 9 | REFERENCE EXAMPLE 1 | PRODUCTION EXAMPLE 2 | 126 | 93 | 0.9 |
| EXAMPLE 10 | REFERENCE EXAMPLE 1 | PRODUCTION EXAMPLE 3 | 108 | 70 | 1.2 |
| COMPARATIVE EXAMPLE 4 | REFERENCE EXAMPLE 1 | REFERENCE EXAMPLE 1 | 92 | 35 | 2.1 |

(Example 11)

A cathode catalyst layer and an anode catalyst layer were formed with the use of the ion conductivity imparting agent prepared in accordance with Producing Example 1, and an MEA was prepared. With the use of the obtained MEA, an anion-exchange membrane fuel cell was prepared, and the electricity generation test was conducted. The relative humidity at 60°C of hydrogen to be supplied to the anode chamber was adjusted to be 40%, and the relative humidity at 60°C of an air from which carbon dioxide had been removed to be supplied to the cathode chamber was adjusted to be 50%. The test results were indicated in Table 5.

(Comparative Example 5)

With the use of the ion conductivity imparting agent prepared in accordance with Reference Example 1, a cathode catalyst layer and an anode catalyst layer were formed, and an MEA was prepared. With the use of the obtained MEA, an anion-exchange membrane fuel cell was prepared, and the electricity generation test was conducted. The relative humidity at 60°C of hydrogen to be supplied to the anode chamber was adjusted to be 40%, and the relative humidity at 60°C of an air from which carbon dioxide had been removed to be supplied to the cathode chamber was adjusted to be 50%. The test results were indicated in Table 5. Although the initial output was evaluated, the cell output became zero before the elapse of 30 hours.

[Table 5]

(TABLE 5)

|  | ION CONDUCTIVITY IMPARTING AGENT | | CELL OUTPUT (mW/cm$^2$) | | OUTPUT DECREASING RATE (%/hr) |
|---|---|---|---|---|---|
|  | SIDE OF CATHODE | SIDE OF ANODE | INITIAL | AFTER 30 HOURS |  |
| EXAMPLE 11 | PRODUCTION EXAMPLE 1 | PRODUCTION EXAMPLE 1 | 130 | 95 | 0.9 |
| COMPARATIVE EXAMPLE 5 | REFERENCE EXAMPLE 1 | REFERENCE EXAMPLE 1 | 85 | --- | --- |

**Reference Signs List**

1a, 1b: cell partition wall
2: fuel gas flow hole
3: oxidant gas flow hole
4: fuel gas chamber side-gas diffusion electrode (anode)

5: oxidant chamber side-gas diffusion electrode (cathode)
6: solid polymer electrolyte
7: fuel gas chamber (anode chamber)
8: oxidant chamber (cathode chamber)
20: MEA
23: anode catalyst layer
25: hydrocarbon anion-exchange membrane
27: cathode catalyst layer
30: MEA
33: anode side-gas diffusion layer
34: anode catalyst layer
35: hydrocarbon anion-exchange membrane
36: cathode catalyst layer
37: cathode side-gas diffusion layer

**Claims**

1. A catalyst layer for an anion-exchange membrane fuel cell, comprising:

   a catalyst; and
   a non-crosslinked hydrocarbon anion-exchange resin that has an anion exchange capacity of from 1.8 to 3.5 mmol/g.

2. The catalyst layer according to claim 1, wherein the hydrocarbon anion-exchange resin has a Young's modulus at 25°C of from 1 to 300 MPa.

3. The catalyst layer according to claim 1, wherein the hydrocarbon anion-exchange resin has a moisture content of from 35 to 100% under a relative humidity of 90%, and from 7 to 25% under a relative humidity of 40%.

4. The catalyst layer according to claim 1, wherein the hydrocarbon anion-exchange resin has a solubility in water at 20°C of 0.3% by mass or more but 1% by mass or less.

5. A membrane-electrode assembly for an anion-exchange membrane fuel cell, comprising:

   a hydrocarbon anion-exchange membrane; and
   the catalyst layer according to claim 1 formed on at least one surface of the hydrocarbon anion-exchange membrane.

6. An anion-exchange membrane fuel cell comprising the membrane-electrode assembly according to claim 5.

7. A method for operating an anion-exchange membrane fuel cell, comprising:

   using the anion-exchange membrane fuel cell according to claim 6; and
   generating electricity by supplying air to an oxidant chamber of the anion-exchange membrane fuel cell.

8. The method for operating an anion-exchange membrane fuel cell according to claim 7, wherein the air supplied to the oxidant chamber is an air that has a relative humidity at an operating temperature of the anion-exchange membrane fuel cell of 70% or less.

[Fig.1]

[Fig.2]

20

23  25  27

[Fig.3]

30

33  34  35  36  37

**INTERNATIONAL SEARCH REPORT**

| International application No. |
| --- |
| PCT/JP2013/068300 |

| A. CLASSIFICATION OF SUBJECT MATTER |
| --- |
| $H01M4/86(2006.01)i$, $H01B1/06(2006.01)i$, $H01M8/10(2006.01)n$ |

According to International Patent Classification (IPC) or to both national classification and IPC

| B. FIELDS SEARCHED |
| --- |
| Minimum documentation searched (classification system followed by classification symbols) |
| H01M4/86, H01B1/06, H01M8/10 |

Documentation searched other than minimum documentation to the extent that such documents are included in the fields searched

| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>A | JP 2008-226614 A  (Tokuyama Corp.),<br>25 September 2008 (25.09.2008),<br>paragraphs [0031] to [0035], [0042], [0065];<br>preparation example 1<br>(Family: none) | 1,2,4-7<br>3,8 |
| X<br>A | WO 2008/149950 A1  (Tokuyama Corp.),<br>11 December 2008 (11.12.2008),<br>paragraphs [0055] to [0058], [0068]<br>& JP 4999123 B          & US 2010/0222208 A1<br>& EP 2157105 A1          & KR 10-2010-0018527 A<br>& AT 550359 T | 1,2,4-7<br>3,8 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>27 September, 2013 (27.09.13) | Date of mailing of the international search report<br>08 October, 2013 (08.10.13) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/068300

C (Continuation). DOCUMENTS CONSIDERED TO BE RELEVANT

| Category* | Citation of document, with indication, where appropriate, of the relevant passages | Relevant to claim No. |
|---|---|---|
| A | WO 2007/119344 A1 (Tokuyama Corp.), 25 October 2007 (25.10.2007), claims 1, 4 & JP 4719796 B & US 2009/0053578 A1 & EP 1995807 A1 & KR 10-2008-0100453 A | 1-8 |
| A | JP 2008-004312 A (Kuraray Co., Ltd.), 10 January 2008 (10.01.2008), entire text (Family: none) | 1-8 |
| E,A | WO 2013/129478 A1 (Tokuyama Corp.), 06 September 2013 (06.09.2013), entire text (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3208260 A
- JP 4329264 A
- JP 11273695 A
- JP 11135137 A
- JP 2000331693 A
- JP 2002367626 A
- JP 1997 A
- JP 216964 A
- JP 2002338721 A
- JP 2007188788 A
- WO 2008120675 A1